# EUROPEAN PATENT SPECIFICATION

(11) **EP 2 433 074 B1**
(45) Date of publication and mention of the grant of the patent: **20.03.2013**
(21) Application number: 10720585.8
(22) Date of filing: 13.05.2010
(51) Int. Cl.: A47J 39/00, F24C 15/18, H05B 6/00, F25D 31/00

(54) **A HOUSEHOLD APPLIANCE**
HAUSHALTSGERÄT
APPAREIL ÉLECTROMÉNAGER

(30) Priority: 22.05.2009 TR 200903986
(43) Date of publication of application: 28.03.2012
(73) Proprietor: Arçelik Anonim Sirketi, 34950 Istanbul (TR)
(72) Inventor: ERTIS, Vasi Kadir, 34950 Istanbul (TR); KERPICCI, Husnu, 34950 Istanbul (TR); AKBAS, Mustafa Omer, 34950 Istanbul (TR)
(86) International application number: PCT/EP2010/056616
(87) International publication number: WO 2010/133502

(56) References cited:
- EP-A2- 1 219 909
- WO-A1-2008/009811
- WO-A2-2004/047133

## Description

The present invention relates to a household appliance comprising a heat regulator that is used for heating or cooling a volume or a surface inside the household appliance.

In household appliances, especially in appliances such as refrigerator and oven used for cooling or heating purposes, the need of heating/cooling some volumes and/or surfaces occasionally apart from the actual cooled/heated volume occurs. In such cases, an additional cooling device/heater for heating/cooling the said volumes and/or surfaces, or insulation materials for insulating them are possibly used and this both increases the cost and adversely affects the efficiency of the household appliance.

Various embodiments have been developed in the technique for solving these problems.

In the state of the art embodiment, the International Patent Application No WO2008107330, a refrigeration device comprising an additional partition which is temperature-controlled by means of a Peltier element and used as butter compartment is explained.

Another state of the art embodiment is explained in the European Patent No EP1219909. In this application, an additional compartment is explained, the heat of which is regulated by means of an infrared heater and a PTC device. In this embodiment, a metal plate is applied to the ceiling of the compartment for providing the efficient transmission of the heat to the compartment. A household appliance according to the preamble of claim 1 is known for example from EP1219909.

The aim of the present invention is the realization of a household appliance having an element which is heated/cooled or insulated without the need of using an additional heater/cooler and/or insulation element.

The household appliance realized in order to attain the aim of the present invention is explicated in the claims.

The household appliance comprises a heat regulator that is used for heating or cooling a volume or a surface inside the household appliance. A receptacle is disposed such that it will at least partially be in contact with this heat regulator or with the volume or surface that is heated/cooled by the heat regulator. A magnetorheological fluid is filled into the receptacle and at least two electromagnets are positioned into the receptacle such that the fluid inside the receptacle will remain in the magnetic field generated by them. The household device, furthermore, comprises an element that is a volume or a surface positioned such that it will at least partially be in contact with the receptacle.

In the preferred embodiment of the present invention, at least two electromagnets are positioned such that they will improve the heat transmission feature of the fluid when they are energized. In other words, the direction of the magnetic field generated by the electromagnets and the direction of the heat transmission towards the element are parallel to each other.

When heat is desired to be transmitted to the element, the electromagnet is energized and the ferromagnetic particles in the fluid are provided to be arranged in the direction wherein the heat transfer to the element will be realized. Thus, the heat generated by the heat regulator is provided to be transmitted also to the element and hence, using an additional heater/cooler for keeping the temperature of the element at the desired value is not needed.

In an embodiment of the present invention, the household appliance comprises at least two electromagnets that are positioned such that they will generate a magnetic field vertically to the heat transmission direction to the element by being energized when the element is desired to be insulated, and thus will provide the ferromagnetic particles in the fluid to be arranged vertically to the heat transmission direction. Thus, the element is provided to be insulated when needed and hence, it is possible to control the element temperature efficiently.

In an embodiment of the present invention, the household appliance is a refrigerator. In a version of this embodiment, the element is the cooling compartment ceiling, on which occurrence of sweating is desired to be prevented by being heated. In this embodiment, the heat regulator is the flange heater which is disposed at the cooling compartment door in order to provide it to be opened easily. The receptacle is disposed between the cooling compartment and the freezing compartment. The receptacle, furthermore, is positioned such that it will at least partially be in contact with the heat regulator. Thus, when the electromagnets are energized, the heat of the heat regulator is transmitted to the element and the problem of sweating is eliminated by providing the element to be heated.

Again in a version of this embodiment, the household appliance also comprises electromagnets that will provide the ferromagnetic particles in the fluid to be arranged such that they will provide insulation between the cooling compartment and the freezing compartment. Thus, efficient control of the heat transmission to the element is possible.

In another version of this embodiment, the element is a special compartment which is positioned in the cooling compartment but desired to be kept at a higher temperature than the cooling compartment it is situated in. In this embodiment, the thermal transmission ability of the fluid in the receptacle is similarly increased by means of the electromagnets and the heat received from the flange heater is provided to be transmitted to the element and thus, the element is provided to be kept warmer than the cooling compartment.

In another version of this embodiment, the element is a quick freeze compartment which is positioned in the freezing compartment but desired to be kept at a lower temperature than the freezing compartment it is situated in. In this embodiment, the heat regulator is the freezing compartment evaporator and the receptacle is laid on the element walls such that one end of it will be in contact with the heat regulator. Thus, the element is provided to be cooled rapidly and effectively.

In another embodiment of the present invention, the household appliance is an oven. In this embodiment, the element is a warm-keeping compartment and the heat regulator is a wall of the cooking cavity. The element is aimed to be kept warm by utilizing the heat of the oven cooking cavity and thus, the cooked foods are aimed to be prevented from getting cold until serving

In an embodiment of the present invention, the receptacle is divided into chambers and an electromagnet is present which is independently energizable for each chamber. Thus, the heat transmission feature of the fluid is provided to be brought to the level closest to the desired level and furthermore, besides the whole element, heating/cooling only one part of it is possible when desired.

The model embodiments that relate to the household appliance realized in order to attain the aim of the present invention are illustrated in the attached figures, where:

Figure 1 - is the schematic view of an embodiment of the present invention.

Figure 2 - is the schematic view of another embodiment of the present invention.

Figure 3 - is the schematic view of another embodiment of the present invention.

Figure 4 - is the schematic view of yet another embodiment of the present invention.

Figure 5 - is the schematic view of the receptacle used in an embodiment of the present invention.

The elements illustrated in the figures are numbered as follows:
1. Household appliance
2. Heat regulator
3. Receptacle
4. Fluid
5. Electromagnet
6. Element
7. Cooling compartment
8. Freezing compartment
9. Door
10. Compressor
11. Cooking cavity
12. Chamber

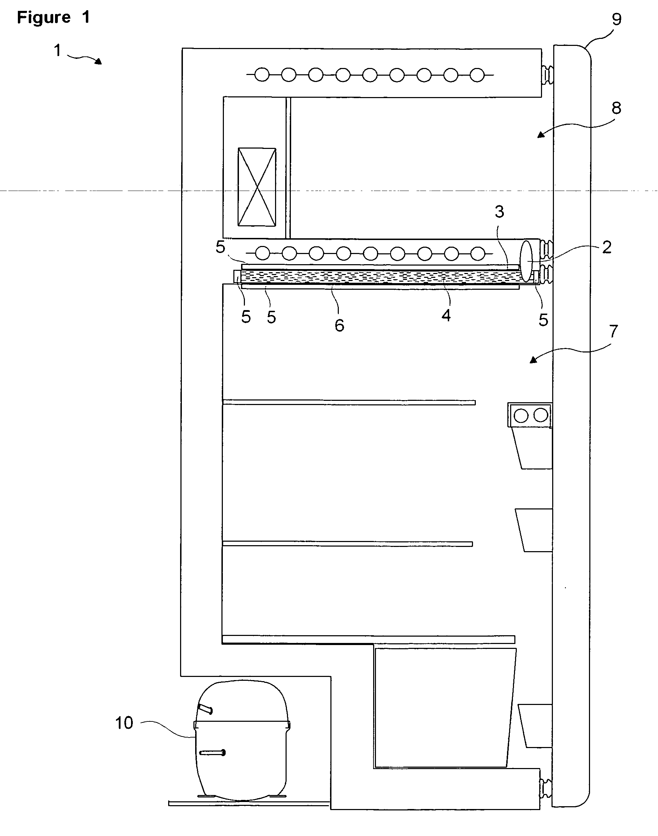

The household appliance (1) comprises a heat regulator (2) that is used for heating or cooling a volume or a surface inside the household appliance (1), a receptacle (3) that is at least partially in contact with this heat regulator (2) or with the volume or surface which is heated/cooled by the heat regulator (2), a magnetorheological fluid (4) filled into the receptacle (4), at least two electromagnets (5) that are positioned such that the fluid (4) inside the receptacle (3) will remain in the magnetic field generated by them, and an element (6) that is positioned such that it will at least partially be in contact with the receptacle (3) (Figure 1).

In the preferred embodiment of the present invention, at least two electromagnets (5) are positioned such that they will provide the ferromagnetic particles in the fluid (4) to be arranged in the direction parallel to the heat transmission direction between the fluid (4) and the element (6).

When the element (6) is desired to be heated/cooled, the electromagnet (5) is energized and the ferromagnetic particles situated in the magnetorheological fluid (4) are provided to be arranged in the direction wherein the heat transfer between the fluid (4) and the element (6) will be realized. Thus, effective heat transfer is provided from the heat regulator (2) or from the volume or surface heated/cooled by this heat regulator (2) to the element (6). Accordingly, energy saving is achieved by providing the element (6) to be heated/cooled effectively without the need of an additional heating/cooling element.

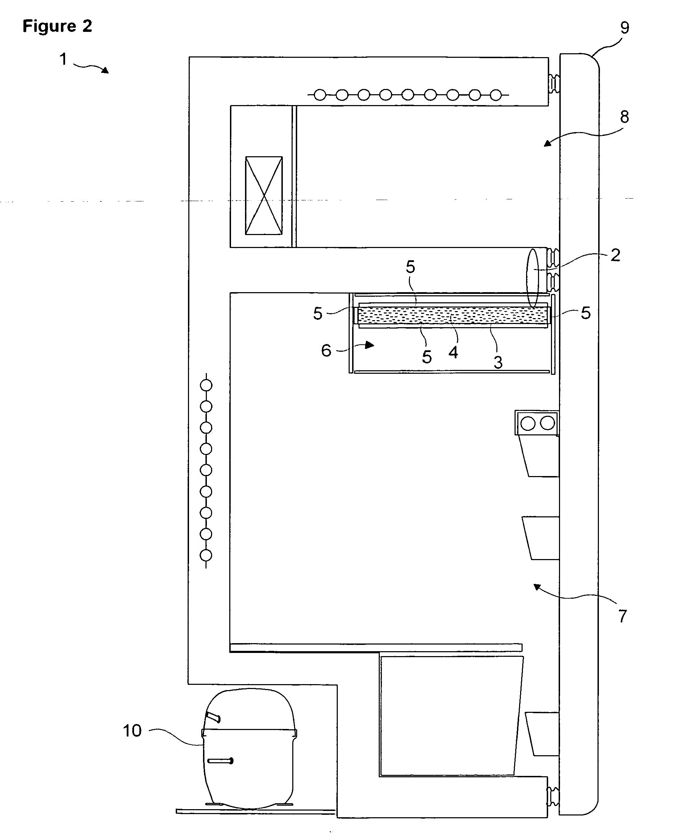

In an embodiment of the present invention, the household appliance (1) comprises at least two more electromagnets (5) which are positioned such that they will provide the ferromagnetic particles in the fluid (4) to be arranged in the direction vertical to the heat transmission direction between the fluid (4) and the element (6) to provide the element (6) to be insulated when required in order to keep the temperature of the element (6) at the desired level. In this embodiment, when the element (6) is desired to be insulated, the electromagnets (5) are operated and thus, the ferromagnetic particles are provided to be arranged in the direction vertical to the heat transmission direction and the heat transfer towards the element (6) is reduced (Figure 1 and Figure 2).

In an embodiment of the present invention, the household appliance (1) is a refrigerator that comprises a cooling compartment (7) wherein the foods to be cooled are stored, a freezing compartment (8) wherein the foods to be frozen are placed, at least two doors (9) providing access into the cooling compartment (7) and freezing compartment (8), and at least one compressor (10) providing the cooling cycle to be realized (Figure 1, Figure 2 and Figure 3).

In a version of this embodiment, the element (6) is the cooling compartment (7) ceiling. During the operation of the household appliance (1), the element (6) is required to be heated in order to prevent the occurrence of sweating on the element (6). In this embodiment, the heat regulator (2) is the flange heater disposed at the cooling compartment (7) door (9) (Figure 1). The receptacle (3) is disposed between the cooling compartment (7) and the freezing compartment (8), in other words, onto the element (6) upper surface such that one end of the receptacle (3) will be in contact with the heat regulator (2). In this embodiment, preferably the electromagnets (5) are energized by the operation of the compressor (10) and generate a magnetic field in the direction of the cooling compartment (7) horizontal axis. Thus, the ferromagnetic particles situated in the fluid (4) transmit the heat received from the heat regulator (2) to the element (6) by means of the thermal bridges they form along the horizontal axis. Thus, sweating is prevented from occurring on the element (6). When the compressor (10) stops, the magnetic field on the fluid (4) is removed and the fluid (4) resumes its previous state.

Again in a version of this embodiment, the household appliance (1), furthermore, also comprises electromagnets (5) that are positioned such that they will generate a magnetic field between the cooling compartment (7) and the freezing compartment (8) in the direction vertical to the heat transmission direction (Figure 1). When insulation is desired to be provided between the cooling compartment (7) and the freezing compartment (8), the electromagnets (5), which are positioned such that they will generate a magnetic field in the direction vertical to the heat transmission direction, are operated and the ferromagnetic particles in the fluid (4) are provided to be arranged vertically to the heat transmission direction. In this situation, the receptacle (3) takes effect as an insulation element and the heat transmission between the cooling compartment (7) and the freezing compartment (8) is minimized.

In another version of this embodiment, the element (6) is a special compartment which is positioned in the cooling compartment (7) but desired to be kept at a higher temperature than the cooling compartment (7). In this embodiment, the element (6) is aimed to be kept at a higher temperature than the temperature of the cooling compartment (7) in accordance with the user request and thus, to become suitable for storing foods such as butter therein. In this embodiment, the heat regulator (2) is again the flange heater disposed at the cooling compartment (7) door (9) (Figure 2).

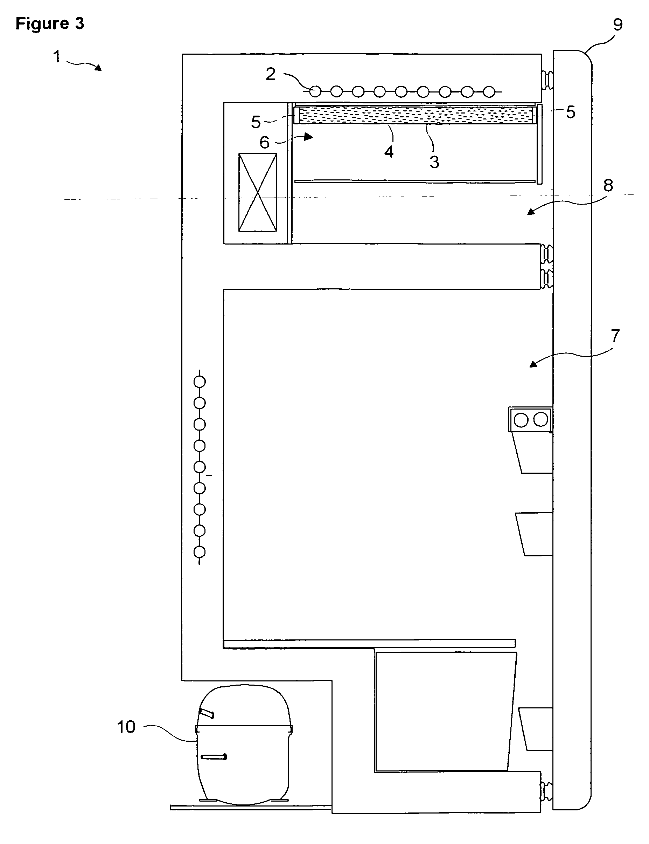

In another version of this embodiment, the element (6) is a quick freeze compartment positioned in the freezing compartment (8). In this embodiment, the element (6) is aimed to be kept at a lower temperature than the temperature of the cooling compartment (7) in accordance with the user request and thus, to become suitable for storing foods desired to be frozen quickly. In this embodiment, the heat regulator (2) is the freezing compartment (8) evaporator (Figure 3). The receptacle (3) is disposed on a wall of the element (6) such that one end of it will be in contact with the heat regulator (2). Thus, the element (6) is provided to be cooled rapidly and effectively.

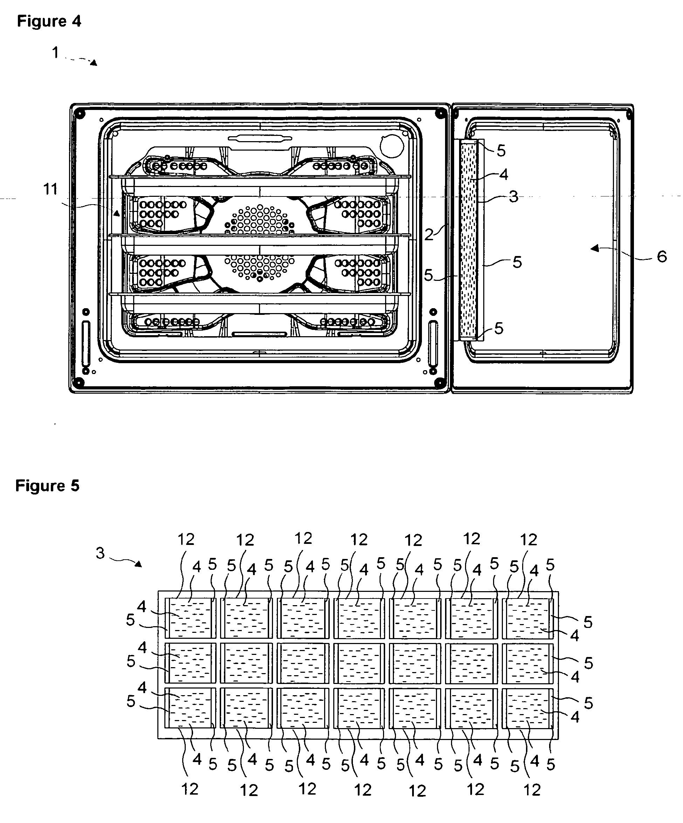

In another embodiment of the present invention, the household appliance (1) is an oven comprising a cooking cavity (11) wherein the foods to be cooked are disposed. In this embodiment, the element (6) is a warm-keeping compartment that is used for providing the plates to be heated and/or the foods, the cooking of which is completed, to be kept warm until serving. The heat regulator (2) is a wall of the cooking cavity (11) (Figure 4). In this embodiment, the electromagnets (5) are preferably positioned such that they will provide the ferromagnetic particles in the fluid (4) to be arranged in the direction parallel to the desired heat transmission direction, and provide an effective thermal transmission by being energized in case the user disposes an item desired to be kept warm into the element (6) during cooking. Thus, heating the item disposed in the element (6) effectively without the need of an additional heater is possible.

In an embodiment of the present invention, the receptacle (3) comprises a multiple number of chambers (12) (Figure 5). In this embodiment, the household appliance (1) comprises an electromagnet (5) for each chamber (12) and the electromagnets (5) can be energized independently of each other. Thus, in accordance with the user request or the conditions, only one part of the chambers (12) inside the receptacle (3) is provided to remain in the magnetic field and only the ferromagnetic particles in the fluid (4) situated in these chambers (12) are provided to be arranged to increase the thermal transmission. Therefore, it is possible to heat/cool only one part of the element (6), too.

It is to be understood that the present invention is not limited to the embodiments disclosed above and a person skilled in the art can easily introduce different embodiments. These should be considered within the scope of the protection postulated by the claims of the present invention.

## Claims

1. A household appliance (1) comprising a heat regulator (2) that is used for heating or cooling a volume or a surface inside the household appliance (1), **characterized by**: a receptacle (3) which is at least partially in contact with this heat regulator (2) or with the volume or surface that is heated/cooled by the heat regulator (2); a magnetorheological fluid (4) which is filled into the receptacle 3); at least two electromagnets (5) which are positioned such that the fluid (4) inside the receptacle (3) will remain in the magnetic field generated by them; and an element (6) which is positioned such that it will at least partially be in contact with the receptacle (3).

2. A household appliance (1) as in Claim 1, **characterized by** at least two electromagnets (5) which are positioned such that they will provide the ferromagnetic particles in the fluid (4) to be arranged in the direction parallel to the heat transmission direction between the fluid (4) and the element (6).

3. A household appliance (1) as in Claim 1 or 2, **characterized by** at least two electromagnets (5) which are positioned such that they will provide the ferromagnetic particles in the fluid (4) to be arranged in the direction vertical to the heat transmission direction between the fluid (4) and the element (6).

4. A household appliance (1) as in any one of the above Claims, which is a refrigerator that comprises a cooling compartment (7) wherein the foods to be cooled are stored, a freezing compartment (8) wherein the foods to be frozen are placed, at least two doors (9) providing access into the cooling compartment (7) and freezing compartment (8), and at least one compressor (10) providing the cooling cycle to be realized.

5. A household appliance (1) as in Claim 4, **characterized by** the element (6) which is the cooling compartment (7) ceiling, the heat regulator (2) which is the flange heater disposed at the cooling compartment (7) door (9), and the receptacle (3) which is disposed between the cooling compartment (7) and the freezing compartment (8) such that one end of the receptacle (3) will be in contact with the heat regulator (2).

6. A household appliance (1) as in Claim 5, **characterized by** the electromagnets (5) which are energized by the operation of the compressor (10).

7. A household appliance (1) as in Claim 4, **characterized by** the element (6) which is a special compartment that is positioned in the cooling compartment (7) but desired to be kept at a higher temperature than the cooling compartment (7), and by the heat regulator (2) which is a flange heater that is disposed at the cooling compartment (7) door (9).

8. A household appliance (1) as in Claim 4, **characterized by** the element (6) which is a quick freeze compartment that is positioned in the freezing compartment (8), and by the heat regulator (2) which is a freezing compartment (8) evaporator.

9. A household appliance (1) as in any one of the Claims 1 to 3, which is an oven that comprises a cooking cavity (11) wherein the foods to be cooked are disposed.

10. A household appliance (1) as in Claim 9, **characterized by** the element (6) that is a warm-keeping compartment used for providing the plates to be heated and/or the foods, the cooking of which is completed, to be kept warm until serving, and by the heat regulator (2) which is a wall of the cooking cavity (11).

11. A household appliance (1) as in any one of the above Claims, **characterized by** the receptacle (3) which has a multiple number of chambers (12), and by an electromagnet (5) which can be energized independently of each other for each chamber (12).

## Patentansprüche

1. Haushaltsgerät (1), umfassend einen Wärmeregler (2), der zum Erwärmen oder Kühlen eines Volumens oder einer Fläche im Inneren des Haushaltsgeräts (1) dient, **gekennzeichnet durch**
- eine Aufnahme (3), die wenigstens teilweise in Kontakt mit dem Wärmeregler (2) oder mit dem Volumen oder der Fläche steht, das bzw. die von dem Wärmeregler (2) erwärmt/gekühlt wird,
- eine magnetorheologische Flüssigkeit (4), die in die Aufnahme (3) gefüllt ist,
- wenigstens zwei Elektromagnete (5), die derart angeordnet sind, dass die Flüssigkeit (4) in der Aufnahme (3) in dem von ihnen erzeugten Magnetfeld bleibt, und
- ein Element (6), das derart positioniert ist, dass es wenigstens teilweise in Kontakt mit der Aufnahme (3) steht.

2. Haushaltsgerät (1) nach Anspruch 1, **gekennzeichnet durch** wenigstens zwei Elektromagnete (5), die derart positioniert sind, dass sie dafür sorgen, dass ferromagnetische Partikel in der Flüssigkeit (4) in der Richtung parallel zur Wärmeübertragungsrichtung zwischen der Flüssigkeit (4) und dem Element (6) angeordnet werden.

3. Haushaltsgerät (1) nach Anspruch 1 oder 2, **gekennzeichnet durch** wenigstens zwei Elektromagnete (5), die derart positioniert sind, dass sie dafür sorgen, dass die ferromagnetischen Partikel in der Flüssigkeit (4) in der Richtung vertikal zur Wärmeübertragungsrichtung zwischen der Flüssigkeit (4) und dem Element (6) angeordnet werden.

4. Haushaltsgerät (1) nach einem der vorangehenden Ansprüche, wobei es sich um einen Kühlschrank handelt, der ein Kühlfach (7), in dem zu kühlende Lebensmittel gelagert werden, ein Gefrierfach (8), in dem einzufrierende Lebensmittel gelagert werden, wenigstens zwei Türen (9), die Zugriff zum Kühlfach (7) und Gefrierfach (8) bieten, und wenigstens einen Kompressor (10) umfasst, der für das Erzeugen des Kühlzyklus sorgt.

5. Haushaltsgerät (1) nach Anspruch 4, **dadurch gekennzeichnet, dass** das Element (6) die Decke des Kühlfachs (7) ist, der Wärmeregler (2) eine Flanschheizeinrichtung ist, die an der Tür (9) des Kühlfachs (7) angeordnet ist, und die Aufnahme (3) derart zwischen dem Kühlfach (7) und dem Gefrierfach (8) angeordnet ist, dass ein Ende der Aufnahme (3) in Kontakt mit dem Wärmeregler (2) steht.

6. Haushaltsgerät (1) nach Anspruch 5, **dadurch gekennzeichnet, dass** die Elektromagnete (5) durch den Betrieb des Kompressors (10) mit Energie versorgt werden.

7. Haushaltsgerät (1) nach Anspruch 4, **dadurch gekennzeichnet, dass** das Element (6) ein Spezialfach ist, das im Kühlfach (7) angeordnet ist, aber auf einer höheren Temperatur als das Kühlfach (7) gehalten werden soll, und der Wärmeregler (2) eine Flanschheizeinrichtung ist, die an der Tür (9) des Kühlfachs (7) angeordnet ist.

8. Haushaltsgerät (1) nach Anspruch 4, **dadurch gekennzeichnet, dass** das Element (6) ein Schnellgefrierfach ist, das im Gefrierfach (8) angeordnet ist, und der Wärmeregler (2) ein Verdampfer des Gefrierfachs (8) ist.

9. Haushaltsgerät (1) nach einem der Ansprüche 1 bis 3, wobei es sich um einen Ofen handelt, der einen Zubereitungsraum (11) umfasst, in dem zuzubereitende Lebensmittel angeordnet werden.

10. Haushaltsgerät (1) nach Anspruch 9, **dadurch gekennzeichnet, dass** das Element (6) ein Warmhaltefach ist, das dazu dient, die zu erwärmenden Teller und/oder fertig zubereitete Lebensmittel warm zu halten, bis sie serviert werden, und der Wärmeregler (2) eine Wand des Zubereitugnsraums (11) ist.

11. Haushaltsgerät (1) nach einem der vorangehenden Ansprüche, **dadurch gekennzeichnet, dass** die Aufnahme (3) eine Vielzahl von Kammern (12) aufweist und dass der Elektromagnet (5) für jede Kammer (12) unabhängig mit Energie versorgt werden kann.

## Revendications

1. Un électroménager (1) comprenant un régulateur de chaleur (2) qui est utilisé pour chauffer ou refroidir un volume ou une surface à l'intérieur de l'électroménager (1), **caractérisé par**
- un récipient (3) qui est au moins partiellement en contact avec ce régulateur de chaleur (2) ou avec le volume ou la surface qui est chauffé(e)/refroidi(e) par le régulateur de chaleur (2),
- un fluide magnéto-rhéologique (4) qui est remplie dans le récipient (3),
- au moins deux électro-aimants (5) qui sont positionnés de telle sorte que le fluide (4) dans le récipient (3) reste dans le champ magnétique généré par eux, et
- un élément (6) qui est positionné de manière à être au moins partiellement en contact avec le récipient (3).

2. Un électroménager (1) selon la Revendication 1, **caractérisé par** au moins deux électro-aimants (5) qui sont positionnés de manière à assurer que les particules ferromagnétiques dans le fluide (4) sont arrangées dans la direction parallèle à la direction de la transmission de chaleur entre le fluide (4) et l'élément (6).

3. Un électroménager (1) selon la Revendication 1 ou 2, **caractérisé par** au moins deux électro-aimants (5) qui sont positionnés de manière à assurer que les particules ferromagnétiques dans le fluide (4) sont arrangées dans la direction verticale à la direction de la transmission de chaleur entre le fluide (4) et l'élément (6).

4. Un électroménager (1) selon l'une quelconque des revendications précédentes, qui est un réfrigérateur qui comprend un compartiment de refroidissement (7) où les aliments à refroidir sont stockés, un compartiment de congélation (8) où les aliments à congeler sont placés, au moins deux portes (9) permettant l'accès dans le compartiment de refroidissement (7) et le compartiment de congélation (8), et au moins un compresseur (10) permettant la réalisation du cycle de refroidissement.

5. Un électroménager (1) selon la Revendication 4, **caractérisé par** l'élément (6) qui est le plafond du compartiment de refroidissement (7), le régulateur de chaleur (2) qui est la résistance électrique chauffante disposée à la porte (9) du compartiment de refroidissement (7), et le récipient (3) qui est disposé entre le compartiment de refroidissement (7) et le compartiment de congélation (8) de telle sorte que l'une extrémité du récipient (3) est en contact avec le régulateur de chaleur (2).

6. Un électroménager (1) selon la Revendication 5, **caractérisé par** les électro-aimants (5) qui sont excitées par le fonctionnement du compresseur (10).

7. Un électroménager (1) selon la Revendication 4, **caractérisé par** l'élément (6) qui est un compartiment particulier qui est positionné dans le compartiment de refroidissement (7) mais maintenu à une température plus élevée que le compartiment de refroidissement (7), et le régulateur de chaleur (2) qui est une résistance électrique chauffante qui est disposée à la porte (9) du compartiment de refroidissement (7).

8. Un électroménager (1) selon la Revendication 4, **caractérisé par** l'élément (6) qui est un compartiment de congélation rapide qui est positionné dans le compartiment de congélation (8), et par le régulateur de chaleur (2) qui est l'évaporateur du compartiment de congélation (8).

9. Un électroménager (1) selon l'une quelconque des revendications de 1 à 3, qui est un four qui comprend une chambre de cuisson (11) où les aliments à cuire sont placés.

10. Un électroménager (1) selon la Revendication 9, **caractérisé par** l'élément (6) qui est un compartiment de garde au chaud utilisé pour chauffer les assiettes et/ou pour garder au chaud les aliments cuits avant de service, et par le régulateur de chaleur (2) qui est une paroi de la chambre de cuisson (11).

11. Un électroménager (1) selon l'une quelconque des revendications précédentes, **caractérisé par** le récipient (3) qui a une multitude de chambres (12), et par un électro-aimant (5) qui peut être excité indépendamment l'un de l'autre pour chaque chambre (12).
